# EUROPEAN PATENT SPECIFICATION

(11) **EP 1 285 843 B1**
(45) Date of publication and mention of the grant of the patent: **10.11.2004**
(21) Application number: 01127521.1
(22) Date of filing: 17.11.2001
(51) Int. Cl.: B62D 27/06, B62D 29/04

(54) **Fastener for vehicle**
Befestigungsvorrichtung für Fahrzeuge
Dispositif de fixation pour véhicules automobiles

(30) Priority: 22.08.2001 KR 2001050709
(43) Date of publication of application: 26.02.2003
(73) Proprietor: KIA MOTORS CORPORATION, Seoul 137-938 (KR)
(72) Inventor: Yoon, Jin, Seoul 152-082 (KR)
(74) Representative: KOHLER SCHMID + PARTNER

(56) References cited:
- GB-A- 2 074 642
- US-A- 5 211 519
- US-A- 5 228 742

## Description

### BACKGROUND OF THE INVENTION

### (a) Field of the Invention

The present invention relates to a structure of a vehicle fastener for fixing various parts (hereinafter, referred to "object") to a vehicle body as described by the preamble of claim 1 and disclosed in document US,A,5,211,519.

### (b) Description of the Related Art

In general, various objects are assembled into a vehicle body by using coupling elements such as bolts, nuts, screws, fasteners and the like, wherein a fastener formed of synthetic resin has been widely used for assembling interior elements in a short time, which do not require a large coupling force, to the vehicle body without using any additional tools.

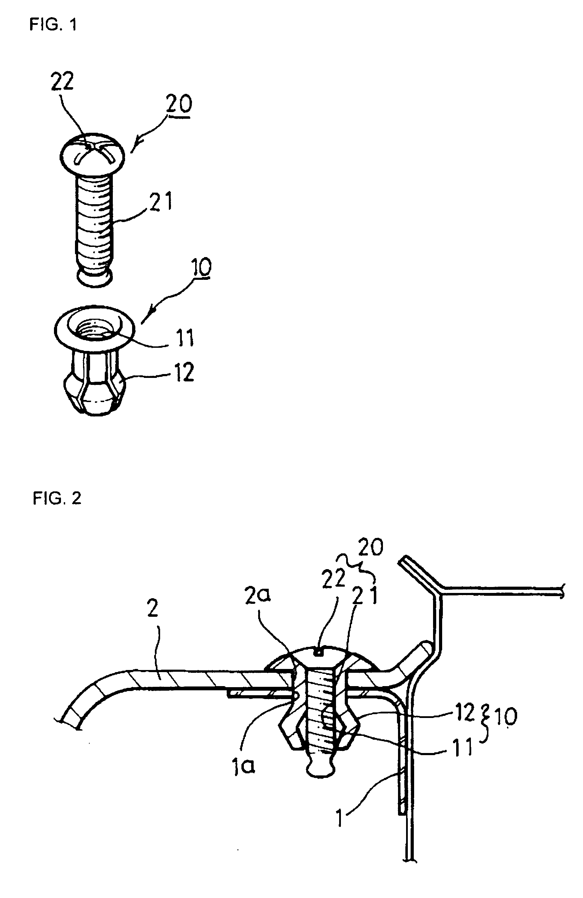

Fig. 1 is an exploded perspective view showing a structure of a prior art fastener, and Fig. 2 is a cross-sectional view showing a fastener, which fixes a bumper cover to a vehicle body bracket. The structure as shown in Fig. 1 and Fig. 2 will be described in more detail below.

The prior art fastener includes a body part 10 formed with a screw hole 11 in the center and holding jaws 12 on an outer peripheral surface of an elastic piece, and a bolt element 20 formed with a male screw part 21 to be coupled in the screw hole that is formed in the main body and a driver insertion groove 22 on a top surface.

As shown in Fig. 2, in order to fix the bumper cover as an object 2 to the vehicle body as a fixing base 1, an insertion hole 1a formed in the fixing base 1 is conformed with an insertion hole 2a of the object 2 and the main body 10 is inserted into both of the insertion holes 1a and 2a, so that a plurality of the holding jaws 12, which are divisionally formed in the main body, becomes pursed inwardly to be inserted and returned to the initial state to be supported by the fixing base 1, as the main body 10 is completely inserted.

In this state, if the bolt element 20 is forcibly inserted into the screw hole 11 formed in the main body 10, the male screw part 21 formed on the outer peripheral surface of the bolt element 20 passes through the screw hole 11, during which the elastic piece formed with the holding jaws 12 is extended outwardly and returned to an initial state as the bolt element is completely inserted, thereby finishing the assembling of the fastener.

As described above, in order to separate the object fixed to the fixing base from the fixing base for the exchange, the bolt element 20 has to be separated from the main body 10.

Therefore, in order to separate the bolt element 20 from the main body 10, a driver (not shown) has to be inserted into the driver insertion groove 22 formed on a top surface of the bolt element 20 and rotated in a direction to release the bolt element 20.

The prior art fastener has, however, disadvantages described below.

First, a length of a neck portion formed in the main body is limited even though a thickness of the fixing base, that is, the vehicle body is determined. Therefore, in order to use parts compatibly, it is necessary to provide a main body, which has necks of different length according to the thickness of the parts to fix.

Second, the holding jaw portions are worn out due to fine slippage repeatedly generated in connection parts by the vibration which is repeatedly generated when driving a vehicle under the state that the object is fixed to the fixing base, thereby degrading the fixing state of the object and generating the noise.

Third, the male screw part formed on the outer peripheral surface becomes worn out in the process of bolt element insertion, since the bolt element is forcibly inserted into the screw hole of the main body. Therefore, the bolt element idles in the screw hole of the main body and is not released from the screw hole in spite of the rotation for releasing the object form the fixing base, and

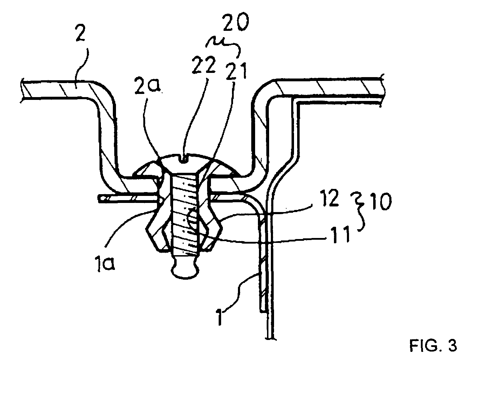

Fourth, it is difficult to fix or separate a fastener to or from a depressed groove since the groove for fixing the fastener to the object is formed deep, when the seating surface to use the fastener is deep, as shown in Fig. 3.

### SUMMARY OF THE INVENTION

Accordingly, the present invention is directed to a fastener for a vehicle that substantially obviates one or more of the problems due to limitations and disadvantages of the related art and is defined by the features of independent claim 1.

An object of the present invention is to provide an improved fastener for a vehicle, which may fix an object to a vehicle body regardless of the thickness of the object.

Another object of the present invention is to provide a fastener for a vehicle that may absorb the vibration, which is generated in coupling parts of an object while the vehicle is driving, thereby preventing the abrasion of coupling parts of the fastener even though the vibration is generated.

A further object of the present invention is to provide a fastener of which locking element may be easily separated from a main body without using any additional tools.

To achieve these and other advantages and in accordance with the purpose of the present invention, as embodied and broadly described, a fastener for a vehicle to be inserted into an insertion hole which is formed in a fixing base of a vehicle body and an insertion hole of an object for integrating the object into the vehicle body, includes a main body having a grommet to be secured on a top surface of a fixing base, an insertion hole formed in the center of the grommet, a plurality of legs formed at a lower part of the grommet, supporting surfaces formed outside the legs to be held by a lower part of the fixing base, and holding jaws formed inside the legs, a locking element having a keeper to be inserted into the insertion hole formed in the main body and held by the holding jaws of the legs by rotating by a predetermined angle, a neck formed long at an upper end part of the keeper, a flange part formed at a front end of the neck, and a rotation element formed on the flange part for rotating the keeper, a washer to be fitted on the neck of the locking element to be connected to a top surface of the object, and an elastic element fitted on the neck to be positioned between the flange df the locking means and the washer for holding the keeper of the locking element by the holding jaws of the main body.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Fig. 1 is a perspective view showing a structure of a prior art fastener for a vehicle, which is disassembled;
Fig. 2 is a cross-section view showing the prior art fastener, which fixes a bumper cover to a bracket of a vehicle body;
Fig. 3 is a view showing the prior art fastener, which fixes an object to a fixing base having a deep seating surface;
Fig. 4 is a perspective view showing a fastener for a vehicle according to the present invention, which is disassembled;
Fig. 5a and Fig. 5b are cross-sectional views of the fastener for a vehicle according to the present invention, which is assembled, wherein;

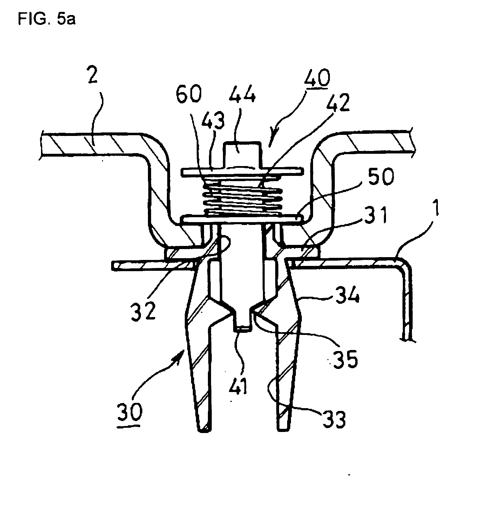

Fig. 5a is a view showing a state that a holding element is inserted into fixing holes formed in an object and a fixing base and a locking element is inserted into the holding element, and

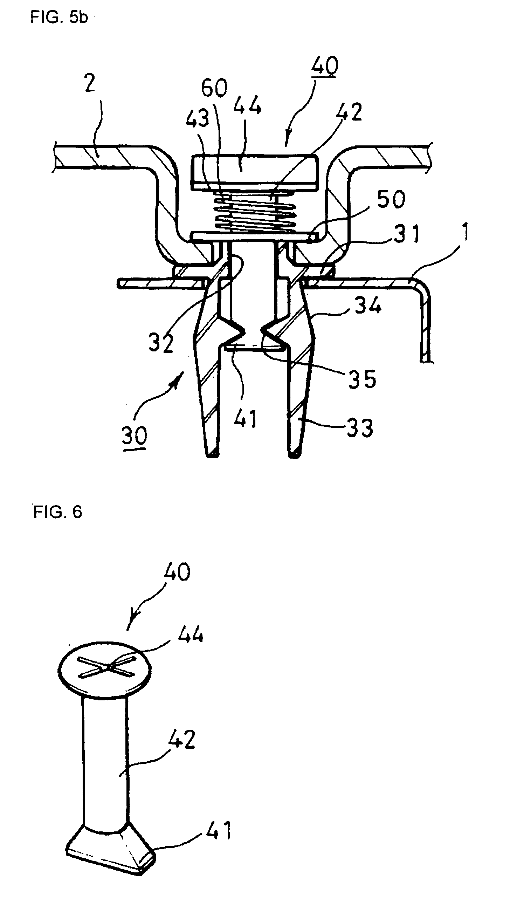

Fig. 5b is a view showing a state that the object is fixed to the fixing base by rotating the locking element by 90°; and
Fig. 6 is a perspective view showing a locking element according to another embodiment of the present invention.

### DETAILED DESCRIPTION OF THE PREFERRED EMBODIMENTS

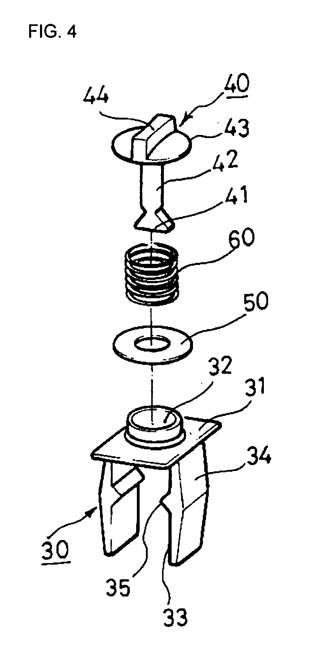

Reference will now be made in detail to a preferred embodiment of the present invention, examples of which are illustrated in Fig. 4 to Fig. 6.

Fig. 4 is a perspective view showing a fastener for a vehicle, which is disassembled, and Fig. 5a and Fig. 5b are cross-sectional views showing the fastener for a vehicle, which is assembled. Referring to Fig. 4 and Fig. 5a and Fig. 5b, the fastener for a vehicle according to the present invention includes a main body 30 to be fixed and supported in a fixing base 1 of a vehicle body, a locking element 40 to be fitted into the main body via an insertion hole 2a of an object 2 for fixing the object 2 to the fixing base, a washer 50 to be fitted on the locking element to be connected to a top surface of the object 2, and an elastic element 60 such as a coil spring for closely contacting the washer fitted on the locking element to the top surface of the object and simultaneously maintaining the holding state between the main body 30 and the locking element 40.

The main body 30 to be fitted and supported in the insertion hole 1a of the fixing base 1 of the vehicle body includes a grommet 31 to be secured on a top surface of the fixing base 1, an insertion hole 32 formed in the center of the grommet 31 to be inserted by the locking element 40, a plurality of legs 33 formed at a lower part of the grommet, supporting surfaces 34 formed outside the legs to be held by a lower part of the fixing base, and holding jaws 35 formed inside the legs, as shown in Fig. 4.

The leg elements 33 downwardly formed to the grommet 31 of the main body 30 are in parallel to one another and the holding jaws 35 formed on the inner surfaces of the legs are protruded by a uniform width.

In the above case that the legs 33 are formed in parallel, the insertion hole 1a of the fixing base 1 of the vehicle body should be formed in the shape of square.

It is also possible to form the legs 33 in the shape of cylinder, which is divided into a plurality of sections, instead of the parallel shape.

In this case, it is preferable for the sake of convenience of the disassembling or coupling work that a stopper 3 is formed for supporting a surface of the grommet 31 for preventing the main body 30 from idling with respect to the fixing base 1 of the vehicle body when the locking element 40 locked in the main body 30 rotates.

The supporting surfaces formed on the legs of the main body 30 are to be slant surfaces which become wider downwardly and then narrower again, so that the legs 33 of the main body 30 may be easily inserted into the insertion hole 1a of the fixing base and the main body 30 may be used without changing the specification of the main body 30 even though a thickness of the fixing base 1 of the vehicle body is changed.

The locking element 40 for supporting the object 2 coupled with the main body 30 with respect to the fixing base 1 includes a keeper 41 to be inserted into the insertion hole formed in the main body and rotated by a predetermined angle so as to be held by the holding jaws 35 of the legs 33, a neck 42 formed long at an upper part of the keeper, a flange part 43 formed at a front end of the neck, and a rotation element 44 formed on the flange part for rotating the keeper.

The keeper 41 formed in the locking element 40 is in the shape of "-" to be fitted between the holding jaws 35 formed inside the legs 33 and then held by the holding jaws 35 when the locking element rotates.

The shape of the keeper 41 may be formed variously according to the shapes of the legs 33 and the holding jaws 35 formed inside the legs.

For example, if the legs 33 are formed in the shape of cylinder which is divided into three or four sections and the holding jaws 35 are formed on inner peripheral surfaces of the legs according to the shape of the legs, then the keeper 41 is formed in the shape of triangular or square protruded piece for passing spaces between the holding jaws formed on the inner peripheral surfaces of the legs, so that the keeper 41 is fitted in the insertion hole 32 of the main body to pass a space between the holding jaws 35. In this state, if the locking element 40 is rotated by a predetermined angle, the keeper 41 is held by the holding jaws 35.

Even though the rotation element 44 formed on the flange part 43 of the locking element 40 is a handle in the shape of knob in Fig. 4 and Fig. 5, the rotation element may also be a driver insertion groove formed in the flange part 43 as shown in Fig. 6.

The elastic element 60 mounted between the flange part 43 and the washer 50 serves to absorb fine vibration, which is generated by the driving of the vehicle while the object 2 is mounted on the fixing base 1, thereby preventing the abrasion of the fastener due to the vibration.

Now, the operation of the fastener for a vehicle structured as above according to the present invention will be described hereinafter.

First, if the legs 33 of the main body are pushed into the insertion hole 1a of the fixing base 1 of the vehicle body after drawing the legs 33 inwardly, and the external force is removed, then the inwardly drawn legs 33 are restored to an initial state, so that the supporting surfaces 34 of the legs contact a bottom surface of the insertion hole 1a of the fixing base 1 and the grommet 31 closely contact the top surface of the fixing base 1.

In case that the grommet 31 is separated from the top surface of the fixing base 1 due to the incomplete insertion of the legs 33 of the main body 30 with respect to the insertion hole 1a, the main body 30 becomes lowered maintaining the contact between the supporting surfaces 34 and the bottom surface of the insertion hole 1a formed in the fixing base 1 due to the own elasticity of the legs 33 by simply pressing the main body 30 downwardly.

The insertion hole 32 of the main body 30 is conformed with the insertion hole 2a of the object 2 and the keeper 41 of the locking element 40 is pushed into the insertion hole 32 of the main body 30 after the main body 30 is assembled into the fixing base 1 of the vehicle body as above, wherein the keeper 41 is pushed into the insertion hole after controlling its position not to be interfered by the holding jaws 35 formed inside the legs 33.

If the interference is not generated even though the elastic element 60 is compressed to lower the keeper 41 after pushing the keeper 41 of the locking element into the insertion hole 32 of the main body 30, the knob 44 serving as the rotation element is rotated to gradually rotate the locking element 40 for passing the keeper 41 through the holding jaws 35, so that the keeper 41 is held by the holding jaws 35, as shown in Fig. 5a.

The assembling of the fastener is finished by removing the external force from the locking element 40 which is pressed and rotated by 90° as the keeper 41 passes through the holding jaws 35.

Therefore, the keeper 41, which is passed through the holding jaws 35 by the external force pressing the locking element 40, is lifted by the restoring force of the elastic element 60, so that the keeper is locked by the holding jaws 35 formed inside the legs 33 as shown in Fig. 5b, thereby locking the object 2 into the fixing base 1.

The washer 50 fitted on the neck 42 of the locking element 40 is maintained in a close contact state with the top surface of the object 2 by the elasticity of the elastic element 60, so that the object 2 cannot move away from the fixing base 1.

Further, the elastic element 60 mounted between the flange part 43 and the washer 50 absorbs any fine vibration, which is generated by the driving of the vehicle while the object 2 is secured with the fixing base 1, thereby preventing the generation of the abrasion of the fastener.

In the meantime, if the object 2 has to be detached from the fixing base 1 to be exchanged with a new one due to the repeated use of the vehicle, the rotation element 44 of the locking element 40 serving as the handle is pressed by hands to press the elastic element 60 down and rotated to release the locking state of the keeper 41 from the holding jaws 35. In this state, if the locking element 40 is pulled upwardly, then the object 2 is separated from the fixing base 1.

The fastener for a vehicle according to the present invention as above has advantages as described hereinafter.

First, a fastener of a single specification may fix objects having different thickness into a fixing base of a vehicle body since various thickness of the object may be received in the range of a length of the neck by the compression force of the elastic element, which is fitted on the neck of the locking element.

Second, the washer contacting the top surface of the object may absorb the vibration generated by the repeated driving of the vehicle while the object is fixed into the fixing base of the vehicle body by compressing the elastic element, so that the fastener may be prevented from being worn out and the generation of the noise due to the abrasion of the fastener may be prevented in advance.

Third, the locking element is locked into the main body by the rotation of the locking element after inserting the keeper of the locking element into the insertion hole of the main body, so that the locking element may be separated from the main body without using any additional tools and accordingly the coupling portion may be prevented from being damaged, thereby using the fastener for a long time.

Fourth, the locking element has a long neck and the rotation element is positioned in the vicinity of an opening part of the depressed groove so that the fastener may be mounted or detached easily even though the seating surface to secure the fastener is deep.

It will be apparent to those skilled in the art that various modifications and variations can be made to the device of the present invention without departing from the scope of the invention. The present invention covers the modifications and variations of this invention provided they come within the scope of the appended claims and their equivalents.

An improved structure of a fastener for a vehicle to be used for fixing various parts to a vehicle body is provided, which includes a main body(30) to be fixed and supported in a fixing base(1) of a vehicle body, a locking element(40) to be fitted into the main body via an insertion hole(2a) of an object(2) for fixing the object(2) to the fixing base, a washer(50) to be fitted into the locking element to be connected to a top surface of the object(2), and an elastic element(60) such as a coil spring for closely contacting the washer fitted into the locking element to the top surface of the object and simultaneously maintaining the holding state between the main body(30) and the locking element(40), wherein an object may be fixed to a fixing base of the vehicle body regardless of a thickness of the object and the vibration, which is generated in a coupling portion of the object when the vehicle is driving, may be absorbed for preventing the abrasion of the coupling portion of the fastener.

## Claims

1. A fastener for a vehicle to be inserted into insertion holes formed in a fixing base (1) of a vehicle body and in an object (2) for integrating the object to the vehicle body, comprising:
a main body (30) having a grommet (31) to be secured on a top surface of the fixing base (1), an insertion hole (32) formed in the center of the grommet (31) and defining the inside of the main body, a plurality of legs (35) formed at a lower part of the grommet (31), supporting surfaces (34) formed on the outside of the legs to engage an under surface of the fixing base (1), and holding jaws (35) formed inside the legs (38); **characterized by** said fastener further comprising:
a locking means (40) having a keeper (41) to be inserted into the insertion hole (32) formed in the main body (30) and held by the holding jaws (35) of the legs (33) by rotating the cocking means (40) by a predetermined angle, a neck (42) longitudinally formed at an upper part of the keeper (41), a flange part (43) formed at an upper part of the neck (42), and a rotation means (44) formed on the flange part (43) for rotating the keeper (41);
a washer (50) to be fitted around the neck (42) of the locking means (40) to make contact with a top surface of the object (2); and
an elastic means (60) fitted on the neck (42) to be positioned between the flange (43) of the locking means (40) and the washer (50) for holding the keeper (41) of the locking means (40) against the holding jaws (35) of the main body (30).

2. A fastener for a vehicle according to claim 1, wherein the supporting surfaces (34) formed on the legs of the main body are slanted surfaces (34) that become wider and then narrower again downwardly.

3. A fastener for a vehicle according to claim 1, wherein the main body (30) is formed with leg means in parallel and the holding jaws (35) protruded from inner surfaces by a uniform width.

4. A fastener for a vehicle according to claim 1 or claim 3, wherein the keeper (41) formed in the locking means (40) is of rectangular cross-section to be fitted between the holding jaws (35) and held by the holding jaws (35) as the locking means (40) rotates.

5. A fastener for a vehicle according to claim 1, wherein the rotation means (4) formed on the flange part of the locking means is a knob-shaped handle.

6. A fastener for a vehicle according to claim 1, wherein the rotation means (44) formed in the flange part of the locking means is a driver insertion groove.

7. A fastener for a vehicle according to claim 1, wherein the elastic means mounted between the flange part and the washer is a coil spring (60).

## Patentansprüche

1. Befestigungsvorrichtung für ein Fahrzeug, die in Einführlöcher eingeführt wird, welche in einer Fixierungsbasis (1) eines Fahrzeugkörpers und in einen Gegenstand (2) zum Integrieren des Gegenstandes am Fahrzeugkörper gebildet sind, umfassend:
einen Hauptkörper (30) mit einer Dichtungshülse (31), die an einer Oberseite der Fixierungsbasis (1) befestigt werden soll, mit einem Einführloch (32), das in der Mitte der Dichtungshülse (31 ) gebildet ist und die Innenseite des Hauptkörpers definiert, mit einer Mehrzahl von Beinen (33), die an einem unteren Teil der Dichtungshülse (31) gebildet sind, wobei Tragflächen (34) an der Außenseite der Beine (33) gebildet sind, um an einer Unterseite der Fixierungsbasis (1) anzugreifen, und mit Haltebacken (35), die im Innern der Beine (33) gebildet sind,
**dadurch gekennzeichnet, dass** die Befestigungsvorrichtung weiter umfasst:
eine Verschlusseinrichtung (40) mit einem Schließhaken (41), der in das Einführloch (32), welches in dem Hauptkörper (30) gebildet ist, eingefügt werden soll und von den Haltebacken (35) der Beine (33) durch Drehung der Verschlusseinrichtung (40) um einen vorbestimmten Winkel gehalten wird, mit einem Hals (42), der longitudinal an einem Oberteil des Schließhakens (41) gebildet ist, mit einem Flanschteil (43), der an einem Oberteil des Halses (42) gebildet ist, und eine Dreheinrichtung (44), die an dem Flanschteil (43) zum Drehen des Schließhakens (41) gebildet ist;
eine Dichtung (50), die um den Hals (42) der Verschlusseinrichtung (40) angeordnet werden soll, um den Kontakt mit einer Oberseite des Gegenstandes (2) herzustellen; und
eine elastische Einrichtung (60), die an dem Hals (42) befestigt ist, um zwischen dem Flansch (43) der Verschlusseinrichtung (40) und der Dichtung (50) zum Halten des Schließhakens (41) der Verschlusseinrichtung (40) gegen die Haltebacken (35) des Hauptkörpers (30) positioniert zu werden.

2. Befestigungsvorrichtung für ein Fahrzeug gemäß Anspruch 1, wobei die an den Beinen des Hauptkörpers gebildeten Tragflächen (34), die sind, Schrägflächen (34) sind, die nach unten breiter und dann wieder enger werden.

3. Befestigungsvorrichtung für ein Fahrzeug nach Anspruch 1, wobei der Hauptkörper (30) mit einer Beineinrichtung parallel gebildet ist und die Haltebacken (35) von den Innenseiten um eine einheitliche Breite vorstehen.

4. Befestigungsvorrichtung für ein Fahrzeug gemäß Anspruch 1 oder Anspruch 3, wobei der Schließhaken (41), der in der Verschlusseinrichtung (40) gebildet ist, einen rechteckigen Querschnitt aufweist, um zwischen den Haltebacken (35) fixiert zu werden und von den Haltebacken (35) gehalten zu werden, während sich die Verschlusseinrichtung (40) dreht.

5. Befestigungsvorrichtung für ein Fahrzeug gemäß Anspruch 1, wobei die an dem Flanschteil der Verschlusseinrichtung gebildete Dreheinrichtung (44) ein knopfförmiger Handgriff ist.

6. Befestigungsvorrichtung für ein Fahrzeug gemäß Anspruch 1, wobei die in dem Flanschteil der Verschlusseinrichtung gebildete Dreheinrichtung (44) eine Greifer-Einführnut ist.

7. Befestigungsvorrichtung für ein Fahrzeug gemäß Anspruch 1, wobei die zwischen dem Flanschteil und der Dichtung montierte elastische Einrichtung eine Schraubenfeder (60) ist.

## Revendications

1. Dispositif de fixation pour un véhicule automobile à insérer dans des trous d'insertion formés dans une base de fixation (1) d'une carrosserie de véhicule automobile et dans un objet (2) pour intégrer l'objet dans la carrosserie comprenant :
un corps principal (30) ayant une rondelle isolante (31) qui doit être sécurisée sur une surface supérieure de la base de fixation (1) un/le trou d'insertion (32) formé dans le centre de la rondelle isolante (31) et définissant l'intérieur du corps principal, de nombreux montants (33) formés dans la partie inférieure des surfaces d'appui(34) de la rondelle isolante (31) formée à l'extérieur des montants (33) pour engrener une surface inférieure de la base de fixation (1) et des mors de serrage (35) formés à l'intérieur des montants (33) **caractérisé en ce que** ledit dispositif de fixation comprend en outre :
un moyen de verrouillage (40) ayant une armature (41) à insérer dans le trou d'insertion (32) formé dans le corps principal (30) et maintenu par les mors de serrage (35) des montants (33) par rotation du moyen de verrouillage (40) d'un angle prédéterminé, un collet (42) formé longitudinalement sur une pièce supérieure de l'armature (41) une partie de bride (43) formée sur une partie supérieure du collet (42) et un moyen de rotation (44) formé sur la partie de bride (43) pour faire pivoter l'armature (41).
une rondelle (50) à adapter autour du collet (42) du moyen de verrouillage (40) pour faire contact avec la surface supérieure de l'objet (2) et
un moyen élastique (60) adapté sur le collet (42) qui doit être positionné entre la bride (43) du moyen de verrouillage (40) et la rondelle (50) pour maintenir l'armature (41) du moyen de verrouillage (40) contre les mors de serrage (35) du corps principal (30).

2. Dispositif de fixation pour un véhicule automobile selon la revendication 1, dans lequel les surface d'appui (34) formées sur les montants du corps principal sont des surfaces inclinées (34) qui s'élargissent puis se rétrécissent de nouveau vers le bas.

3. Dispositif de fixation pour un véhicule automobile selon la revendication 1, dans lequel le corps principal (30) est formé avec des montants en parallèle et les mors de serrage (35) dépassant des surfaces internes d'une largeur homogène.

4. Dispositif de fixation pour un véhicule automobile selon la revendication 1 ou la revendication 3, dans lequel l'armature (41) formée dans le moyen de verrouillage (40) est de section transversale rectangulaire qui doit être adaptée entre les mors de serrage (35) et maintenue par les mors de serrage (35) lorsque le moyen de verrouillage (40) pivote.

5. Dispositif de fixation pour un véhicule automobile selon la revendication 1 dans lequel le moyen de rotation (44) formé sur la partie de bride du moyen de verrouillage est une poignée en forme de bouton.

6. Dispositif de fixation pour un véhicule automobile selon la revendication 1 dans lequel le moyen de rotation (44) formé sur la partie de bride du moyen de verrouillage est une rainure d'insertion de commande.

7. Dispositif de fixation pour un véhicule automobile selon la revendication 1 dans lequel le moyen élastique monté entre la partie de bride et la rondelle est un ressort hélicoïdal (60).
